# EUROPÄISCHE PATENTANMELDUNG

(11) **EP 2 645 504 A2**
(43) Veröffentlichungstag der Anmeldung: **02.10.2013**
(21) Anmeldenummer: 13167988.8
(22) Anmeldetag: 19.06.2007
(51) Int. Cl.: H02G 3/08, H01L 31/048

(54) **Anschlussdose**

(30) Priorität: 29.06.2006 CH 10562006
(62) Teilanmeldung aus: 07720196.0
(71) Anmelder: Huber+Suhner AG, 9100 Herisau (CH)
(72) Erfinder: Stucki, Martin, 8330 Pfäffikon (CH); Grimberg, Thomas, 8404 Winterthur (CH)
(74) Vertreter: Rentsch Partner AG

(57) **Zusammenfassung**

Die Erfindung betrifft eine Anschlussdose (1) die sich insbesondere zur Verkabelung einer oder mehrerer Solarzellen (33) eignet. Die Anschlussdose (1) weist ein Gehäuseunterteil (2) und ein Gehäuseoberteil (3) auf. Das Gehäuseoberteil (3) weist eine Haltmittel (21) zur Aufnahme einer Platine (20) auf.

## Beschreibung

Die vorliegende Erfindung liegt auf dem Gebiet der Verbindungstechnik und betrifft eine Anschlussdose zum Anschliessen einer Verkabelung an ein Gerät, insbesondere zum Anschliessen einer Verkabelung an ein photovoltaisches Modul (photovoltaischer Kollektor, Solarpaneel, Solarzelle)

Photovoltaische Solaranlagen weisen in der Regel einen modulare Aufbau auf und bestehen aus einer Vielzahl von Solarzellen, welche über eine externe Verkabelung angeschlossen werden. Um eine höhere Spannung zu erzielen werden die einzelnen Solarzellen zumindest gruppenweise in Serie geschaltet, indem der Pluspol einer ersten Solarzelle mit dem Minuspol mindestens einer weiteren Solarzelle verbunden wird. Ein Problem besteht dabei darin, dass bei einer partiellen Abdeckung einer Solarzelle, z.B. infolge von Schattenwurf von umstehenden Objekten oder durch Wolken, dieser passiv wird und nur wenig oder gar nicht zur Stromproduktion beiträgt. Dies hat zur Folge, dass die abgedeckte Solarzelle bei einer Serieschaltung vom Strom der benachbarten Solarzelle durchflossen wird und dadurch Schaden nehmen oder zumindest eine Verringerung der Lebensdauer erfahren kann. Aus diesem Grund ist bekannt, dass Solarzellen mittels einer elektronischen Schaltung, die in der Regel Dioden als Schutzelemente aufweist, temporär überbrückt und damit während der Störung von der Stromproduktion abgekoppelt werden. Diese elektronischen Schaltungen werden häufig in Anschlussdosen untergebracht, die gleichzeitig zum Anschliessen der Verkabelung dienen.

EP999601 von Sumitomo Wiring Systems Ltd. zeigt eine Anschlussdose für Solarzellen mit einem Gehäuse mit einer unteren und einer oberen Abdeckung, die über Steckverbindungen miteinander verbindbar sind. Die obere Abdeckung verfügt über Anschlüsse für eine externe elektrische Verkabelung, sowie elektrische Steckkontakte die so angeordnet sind, dass sie bei geschlossener Stellung des Gehäuses mit korrespondierenden elektrischen Kontakten der unteren Abdeckung eine elektrische Verbindung ergeben. In der oberen Abdeckung sind Dioden angeordnet, die zum Schutz der Solarzelle dienen. Um die Anordnung wetterfest zu machen sind die Dioden in ein Füllermaterial, z.B. Silikon, eingegossen. Ein besonderer Nachteil dieser Anordnung besteht darin, dass sie nicht für heutige Hochleistungssolarzellen geeignet sind, da sie eine nur ungenügende Kühlung aufweisen. Ein weiterer Nachteil besteht darin, dass das vorgeschlagene Eingiessen in Silikon den Materialverbrauch und das Gewicht unnötig erhöht, sowie zeitintensiv ist. Ein weiterer Nachteil besteht darin, dass bei einem Defekt der Ersatz der elektrischen Schaltung mit verhältnismässig grossem Aufwand verbunden ist. Der Aufbau erfordert, dass die gesamte obere Abdeckung ersetzt werden muss, weil die elektronischen Bauteile nicht zugänglich sind und entsprechend nicht einzeln ausgetauscht werden können.

US6582249 von Tyco Electronics AMP GmbH zeigt eine Anschlussdose für Solarmodule mit einem Gehäuse aus Kunststoff und einem mit einem Gelenkband verbunden Deckel. Das Gehäuseunterteil weist eine Öffnung für Anschlüsse eines Solarpaneels und Anschlüsse für eine externe elektrische Verkabelung auf. Im Gehäuseunterteil sind zwischen den Anschlüssen elektrische Bauteile, z.B. Dioden angebracht. Die elektrischen Bauteile können durch eine an der seitlichen Innenwand des Gehäuses schwenkbar angebrachte Schutzabdeckung gegen Berührung geschützt werden. Vorzugsweise werden die Bauteile durch eine Öffnung in der Schutzabdeckung mit einem Füllermaterial vergossen nachdem die Schutzabdeckung im Gehäuse in bestimmungsgemässer Lage fixiert wurde.

EP1605554 von Mantenimiento Instalaciones Malaga SL zeigt eine Anschlussdose für Solarzellen mit einem Gehäuseunterteil und einem Deckel mit lösbarer Steckverbindung. Das Gehäuse weisst eine erste Öffnung für Anschlüsse einer Solarzelle und eine zweite Öffnung für Anschlüsse einer externen elektrischen Verkabelung auf. Im Gehäuse kann mittels einer Schraube eine Leiterplatte befestigt werden.

Das deutsche Gebrauchsmuster DE202005018884U1 von Multi-Holding AG zeigt eine Anschlussdose für ein Solarpaneel. Die Anschlussdose weist ein Gehäuseunterteil und einen Deckel auf, der mit dem Gehäuseunterteil schwenkbar verbunden ist. Das Gehäuseunterteil weist Öffnung für Anschlüsse eines Solarpaneels und eine externe elektrische Verkabelung auf. Im Innern des Gehäuses sind Kontaktelemente für die Befestigung elektrischer Bauteile, insbesondere Dioden vorgesehen. Die Kontaktelemente sind derart ausgebildet, dass sie die durch die Dioden entstehende Wärme aufnehmen und ableiten sollen.

EP1501133 von Tyco Electronic AMP GmbH zeigt eine Anschlussdose für ein Solarpaneel. Die Anschlussdose weist ein Gehäuseunterteil und einen mit dem Gehäuseunterteil über ein Scharnier schwenkbar verbundenen Deckel auf. Das Gehäuseunterteil weist im Bereich des Bodens eine Öffnung für Anschlüsse eines Solarpaneels und in einer Seitenwand Öffnungen für eine externe elektrische Verkabelung auf. Im Innern des Gehäuses sind Stromschienen und Kontaktelemente angeordnet. Eine Ausführungsform weist eine Leiterplatte mit Dioden auf, welche durch Halteelemente des Gehäuses festgehalten wird.

JP20022359389 von Kitani Denki KK zeigt eine Anschlussdose für Solarzellen mit einem Gehäuse mit einem Gehäuseunterteil und einem abnehmbaren Deckel. Öffnungen im Bereich des Bodens des Gehäuseunterteils dienen zum Anschluss an ein Solarpaneel. Öffnungen in einer Seitenwand dienen zum Anschluss einer elektrischen Verkabelung. Austauschbar angeordnete Dioden dienen als Schutzelemente.

DE102005044939 von Spelsberg Guenther GmbH Co KG offenbart eine Anschlussdose für Solarzellen. Die Anschlussdose weisst eine Schutzeinrichtung z.B. in Form einer Bypassdiode auf. Die Leiterplatte ist mit einem Kühlelement verbunden, welches zur Ableitung von Wärme aus dem Gehäuse herausgeführt und mit dem Rahmen des Solarpaneels verbunden ist. Aus dem Stand der Technik bekannte Anschlussdosen weisen häufig das Problem auf, dass sie kompliziert zu montieren sind. Ein Nachteil besteht darin, dass die Kabel mit dem Gehäuseunterteil fix verbunden werden. Ein weiterer Nachteil besteht darin, dass die Wartungsfreundlichkeit und der Austausch von Bauteilen sich als schwierig gestaltet, da die Bauteile eingegossen sind. Weitere Probleme ergeben sich infolge mangelnder Kühlung. Auch hier besteht ein Problem darin, dass sich durch das Eingiessen in ein isolierendes Material zwar eine gewisse Resistenz gegen Umwelteinflüsse ergibt, aber der Nachteil einer ungenügenden Kühlung in Kauf genommen werden muss. Die aus dem Stand der Technik bekannten Gehäuse von Anschlussdosen eignen sich ebenfalls nicht für einen Einsatz bei beschränkten Platzverhältnissen, da eine Montage des Deckels nicht möglicht ist, oder der Deckel fix über ein Scharnier mit dem Gehäuseunterteil verbunden ist und so unter Umständen gar nicht weit genug geöffnet werden kann. Muss eine Solarzelle bei einer herkömmlichen Verkabelung ausgetauscht werden, hat dies in der Regel zur Folge, dass die gesamte Anlage abgeschaltet werden muss.

Eine Aufgabe der Erfindung besteht darin eine Anschlussdose zu zeigen, welche die dem Stand der Technik anhaftenden Probleme nicht aufweist. Eine weitere Aufgabe der Erfindung besteht darin eine Anschlussdose mit einem modularen Aufbau zu zeigen, welche einen flexiblen Aufbau und eine bedarfsgerechte Bestückung ermöglicht, so dass unterschiedlichen Anforderungen Rechnung getragen werden kann. Eine weitere Aufgabe der Erfindung besteht darin eine verbesserte Anschlussdose für Solarzellen zu zeigen, welche sich insbesondere für eine Montage auf einer Unterseite einer Solarzelle und bei beschränkten Platzverhältnissen eignet.

Die Aufgabe wird durch die in den Patentansprüchen definierte Erfindung gelöst.

Eine erfindungsgemässe Anschlussdose weist in der Regel einen Gehäuseunterteil und einen Gehäuseoberteil (Deckel) auf der mit dem Gehäuseunterteil lösbar wirkverbunden werden kann. Der Gehäuseunterteil weist normalerweise einen Sockel auf, der zur Montage der Anschlussdose auf einer Oberfläche, z.B. einer Solarzelle, dient. Externe Kabel werden in der Regel über Stecker, Klemmverbindungen oder direkt z.B. über Lötverbindungen vorzugsweise am Gehäuseoberteil angeschlossen, das bei Bedarf eine Platine mit elektrischen oder elektronischen Bauelementen oder ein Trägerelement für elektrische oder elektronische Funktionseinheiten oder Bauelemente, z.B. eine Platte aus Kunststoff, enthält. Kontaktelemente und/oder Steckverbindungen bilden eine elektrische Wirkverbindung zwischen dem Gehäuseoberteil und dem Gehäuseunterteil, das z.B. auf der Rückseite einer Solarzelle angebracht und mit diesem elektrisch verbunden ist. Zwischen dem Gehäuseunterteil und dem Gehäuseoberteil kann eine Dichtung vorgesehen sein, die zumindest gewisse Gehäusebereiche hermetisch abschliesst, so dass keine Feuchtigkeit eindringen kann. Gewisse Gehäusebereiche können aktiv oder passiv gekühlt sein, um z.B. durch Dioden entstehende Abwärme zu entfernen. Das Gehäuseunterteil und/oder das Gehäuseoberteil können mehrere Unterteilungen aufweisen von denen gewisse hermetisch abgeriegelt oder gekühlt werden. Dies kann z.B. durch Zwischenböden oder zusätzliche sekundäre Innengehäuse/Innenwände bewerkstelligt werden.

In einer Ausführungsform weist der Deckeloberteil im hinteren Bereich vorstehende Lagerzapfen auf, die in Schliessstellung des Gehäuseoberteils in korrespondierende Lageröffnungen im Gehäuseunterteil eingreifen. Die Lagerzapfen sind vorzugsweise so ausgebildet, dass das Gehäuseoberteil vom Gehäuseunterteil entfernt werden kann, wenn das Gehäuseoberteil zumindest in einem Bereich partiell angehoben wurde. Am gegenüberliegenden vorderen Bereich und/oder seitlich weist das Gehäuseoberteil weitere Wirkverbindungsmittel auf mittels denen das Gehäuseoberteil mit dem Gehäuseunterteil vorzugsweise lösbar wirkverbunden werden kann. In einer Ausführungsform weist das Gehäuseoberteil vorstehende Schnapphacken auf, die beim Schliessen des Gehäuseoberteils in entsprechende Öffnungen des Gehäuseunterteils eingreifen und dieses sicher verschliessen. Die Schnapphacken können so angeordnet sein, dass das Gehäuse der Anschlussdose nicht ohne ein speziell dafür vorgesehenes/ausgebildetes Werkzeug geöffnet werden kann. Je nach Anwendungsgebiet können alternativ oder in Ergänzung andere Wirkverbindungsmittel vorgesehen werden. Zum Beispiel besteht die Möglichkeit die Gehäuseteile mit Schrauben zu sichern und/oder nur einmal verwendbare Plomben, respektive Sicherungsstifte vorzusehen, die bei jedem Öffnen des Gehäuses ersetzt werden müssen. Es besteht weiter die Möglichkeit die Schnapphacken des Gehäuseoberteils entsprechend auszugestalten, so dass sie beim Öffnen brechen und damit ein Öffnen anzeigen. In diesem Fall muss der Deckel in der Regel bei jedem Öffnen ersetzt werden.

Das Gehäuseoberteil ist in einer Ausführungsform so ausgebildet, dass es zur Aufnahme einer Platine mit einer elektronischen Schaltung oder elektrischen Bauelementen geeignet ist. Zu diesem Zweck weist das Gehäuseoberteil Haltemittel auf, in welche die Platine lösbar oder unlösbar eingesetzt werden kann. Alternativ oder ergänzend wird die Platine eingeklebt oder eingeschweisst, so dass eine Trennung vom Gehäuseoberteil nicht möglich ist. In diesem Fall muss bei einem Defekt der Platine das Gehäuseoberteil mit der Platine ausgetauscht werden. Das Gehäuseoberteil und die Platine bilden vorzugsweise eine Einheit, die zum Beispiel eine separate Kabelanschlussvorrichtung aufweist. Dadurch wird es möglich die Platine und/oder das Gehäuseoberteil mit Kabeln losgelöst vom Gehäuseunterteil der Anschlussbox, das z.B. schon auf einer Oberfläche einer Solarzelle angebracht ist, elektrisch zu verbinden und zu konfektionieren, bevor die Einheit bestehend aus Gehäuseoberteil und Platine in das Gehäuseunterteil eingesetzt werden. Ein Hohlraum zwischen dem Gehäuseunterteil und dem Gehäuseoberteil und/oder der Platine kann mit einer Dichtung hermetisch abgeschlossen werden, so dass Steckverbindungen und/oder elektrische Bauelemente gegen Umwelteinflüsse abgeschirmt sind.

In einer Ausführungsform weist die Platine auf der zur Gehäuseunterseite hin angeordneten Seite erste elektrische Kontakte auf, die so angeordneten sind, dass sie beim Schliessen des Gehäuses mit entsprechenden zweiten elektrischen Kontakten des Gehäuseunterteils zusammenwirken um z.B. eine Wirkverbindung mit der elektronischen Schaltung der Platine herzustellen. Die elektronische Schaltung oder die elektrischen Bauelemente können dabei auf der anderen Seite der Platine im Innern des Gehäuseoberteils angeordnet sein, wo sie einerseits vor äusseren Einflüssen geschützt sind und wo andererseits einfacher eine Wärmeableitung weg von der Solarzelle realisiert werden kann. Je nach Anwendungsgebiet kann das Gehäuseoberteil Öffnungen aufweisen, die zum Beispiel zur Wärmeableitung oder zur Kühlung der Platine und der darauf angebrachten Bauelemente dienen. Weiter kann die Platine als thermisches Trenn- oder lsolationselement ausgelegt sein, indem die Platine den Wärmetransport von der Solarzelle zu der elektrischen Schaltung oder den elektrischen Bauteilen oder dem umgekehrten Wärmetransport reduziert. Andere thermische Trennelemente sind denkbar, z.B. ein Trägerelement aus Kunststoff. In einer bevorzugten Ausführungsform weist das Gehäuseoberteil Kühlöffnungen auf die so angeordnet sind, dass ein Kühlmedium (z.B. Luft) aktiv oder passiv durch das Gehäuse und entlang der Platine strömen kann. Zumindest Bereiche der Platine können zu diesem Zweck als Kühlelemente ausgebildet sein oder mit weiteren Kühlelementen z.B. in Form von Kühlrippen ausgestaltet sein. Alternativ oder in Ergänzung kann zumindest eines der Gehäuseteile als Kühlelement ausgestaltet sein. Falls erforderlich sind zumindest gewisse elektrische Elemente isoliert, so dass z.B. durch die Kühlöffnung eindringende Feuchtigkeit nicht zu einem Kurzschluss oder der Gefahr eines Stromschlages führen. Gute Resultate werden mit einem isolierenden Schutzlack (z.B. auf Silikonbasis) erzielt.

Das Gehäuseoberteil und/oder das Gehäuseunterteil weisen in der Regel die Möglichkeit auf Kabel an die Anschlussdose oder an elektrische oder elektronische Bauteile oder Baugruppen im Innenraum der Anschlussdose anzuschliessen. In einer bevorzugten Ausführungsform weist das Gehäuseoberteil eine Kabelöffnung auf, die zur Durchführung eines Kabels ins Innere dient. Die Kabelöffnung kann als Klemme ausgestaltet sein, so dass sie beim Schliessen des Gehäuses eine Klemmwirkung auf das Kabel ausübt und so dieses gegen ungewolltes Verschieben oder Herausziehen schützt. Das ins Innere des Gehäuses geführte Kabel kann direkt auf der Platine oder mit einem anderen Mittel wirkverbunden werden. Ein Vorteil der Kabelanschlüsse im Bereich des Gehäuseoberteils besteht darin, dass die Kabel separat mit dem Gehäuseoberteil, resp, der Platine wirkverbunden werden können.

Das Gehäuseunterteil und das Gehäuseoberteil werden vorzugsweise durch Spritzgiessen aus Kunststoff hergestellt. Allfällig vorhandene Dichtungen werden eingelegt oder mittels eines Mehrkomponenten-Spritzgiessverfahrens angespritzt.

Eine Ausführungsform der Erfindung umfasst eine Anschlussdose mit einem Gehäuseunterteil und einem damit wirkverbindbaren Gehäuseoberteil welches Haltemittel zur Aufnahme einer Platine aufweist, wobei das Gehäuseoberteil Mittel zum Anschliessen einer externen Verkabelung aufweisen kann. Das Gehäuseunterteil weist in der Regel einen Sockel auf, der zur Montage der Anschlussbox auf einer ebenen und/oder gekrümmten Oberfläche dient. Alternativ oder in Ergänzung weist das Gehäuseunterteil Wirkverbindungsmittel auf, mittels denen das Gehäuseunterteil falls notwendig mit einem weiteren Teil wirkverbunden werden kann, z.B. einer Basisplatte. Als Wirkverbindungsmittel können z.B. Schnapp- und/oder Schwalbenschwanzverbindungen vorgesehen werden, welche eine lösbare oder unlösbare Wirkverbindung ermöglichen. Die Basisplatte kann wiederum als Montageplatte ausgebildet sein. Ein Vorteil besteht darin, dass insbesondere bei beschränkten Platzverhältnissen die Basisplatte zuerst befestigt werden kann. Anschliessend kann das Gehäuseunterteil, das zur Aufnahme des Gehäuseoberteils geeignet ist, mit der Basisplatte wirkverbunden werden.

Die Haltemittel zur Aufnahme der Platine können aus einer Auflage, einem Hinterschnitt und/oder Schnappelementen bestehen. Sowohl das Gehäuseunterteil als auch das Gehäuseoberteil sind im Wesentlichen schalenförmig, z.B. einseitig offen ausgebildet, so dass im geschlossenen Zustand die Anschlussdose einen durchgehenden Innenraum (Hohlraum) aufweist. Bei Bedarf erstreckt sich die Platine im Wesentlichen über die gesamte Breite der offenen Seite des Gehäuseoberteils bzw. des Innenraums der Anschlussdose. Die Platine kann zwischen dem Gehäuseunterteil und dem Gehäuseoberteil angeordnet sein. Zwischen der Platine und dem Gehäuseoberteil und/oder dem Gehäuseunterteil kann eine Dichtung angeordnet ist. In einer bevorzugten Ausführungsform bilden das Gehäuseoberteil und das Gehäuseunterteil eine modulare Einheit, Die Platine kann mit elektrischen und/oder elektronischen Bauelementen bestückt sein. Das Gehäuseunterteil kann eine Öffnung zur Aufnahme von elektrischen Anschlüssen z.B. einer Solarzelle aufweisen, wobei die Öffnung vorzugsweise im Gehäuseboden angebracht ist, Bei Bedarf kann die Öffnung und/oder ein Teil des Innenraums des Gehäuseunterteils zumindest teilweise mit einem Füllermaterial wie Silikon oder Klebstoff ausgegossen werden, sofern weder die Kühlung der Anschlussdose oder von deren modularen Bestandteilen noch das Zusammenwirken des Gehäuseunterteils mit dem Gehäuseoberteil, d.h. das Schliessen der Anschlussdose beeinträchtigt wird. Die Platine kann mit dem Gehäuseunterteil über erste und zweite elektrische Kontakte zusammenwirken, die beim Schliessen des Gehäuseoberteils mit dem Gehäuseunterteil in Wirkverbindung treten.

Weitere Ausführungsformen sind denkbar, bei welchen eine Platine im Gehäuseoberteil und/oder Gehäuseunterteil eingesetzt ist.

Ausführungsformen der Erfindung werden anhand der nachfolgenden Figuren näher erläutert. Es zeigen:
- Fig. 1: eine Anschlussdose in einer perspektivischen Darstellung von schräg vorne und oben;
- Fig. 2: die Anschlussdose gemäss Figur 1 in einer perspektivischen Darstellung von schräg vorne und unten;
- Fig. 3: die Anschlussdose gemäss Figur 1 in einer perspektivischen Darstellung von schräg oben und hinten;
- Fig. 4: die Anschlussdose gemäss Figur 1 in einer perspektivischen Darstellung schräg unten und hinten;
- Fig. 5: zeigt die Anschlussdose gemäss Figur 1 in einer Draufsicht;
- Fig. 6: zeigt eine Schnittdarstellung entlang der Linie DD gemäss Figur 5;
- Fig. 7: zeigt die Anschlussdose gemäss Fig. 1 von schräg vorne und oben montiert auf einer Solarzelle mit geöffnetem Gehäuseoberteil;
- Fig. 8: zeigt die Anschlussdose gemäss Fig. 1 schräg hinten und oben montiert auf einer Solarzelle und mit aufgeschnittenem Gehäuseoberteil.

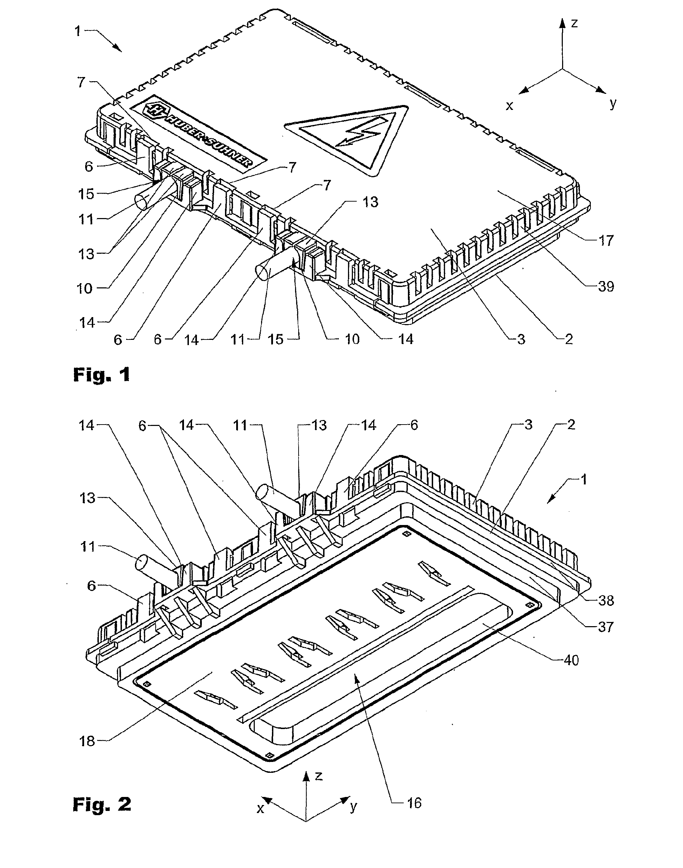

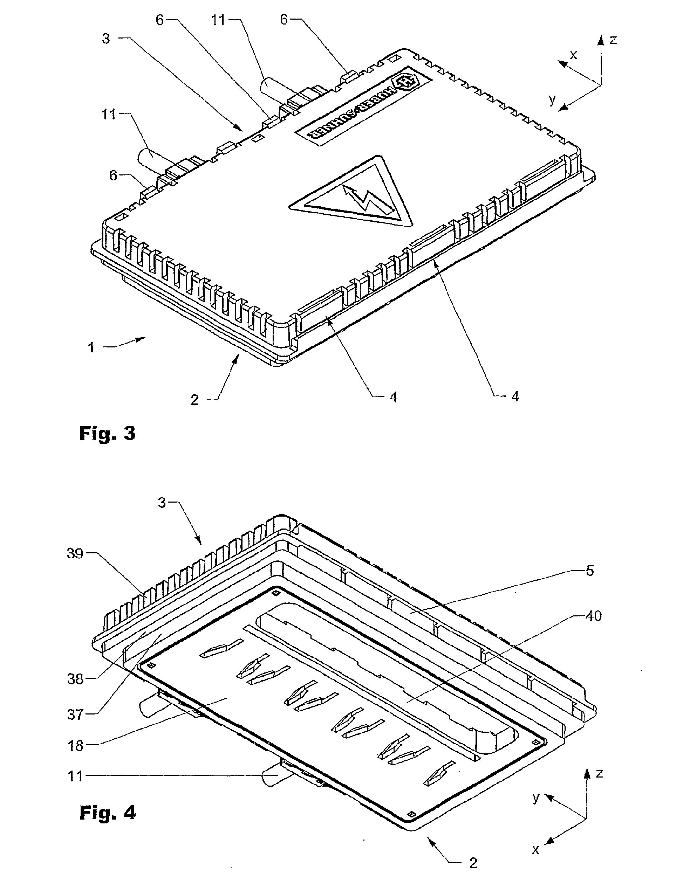

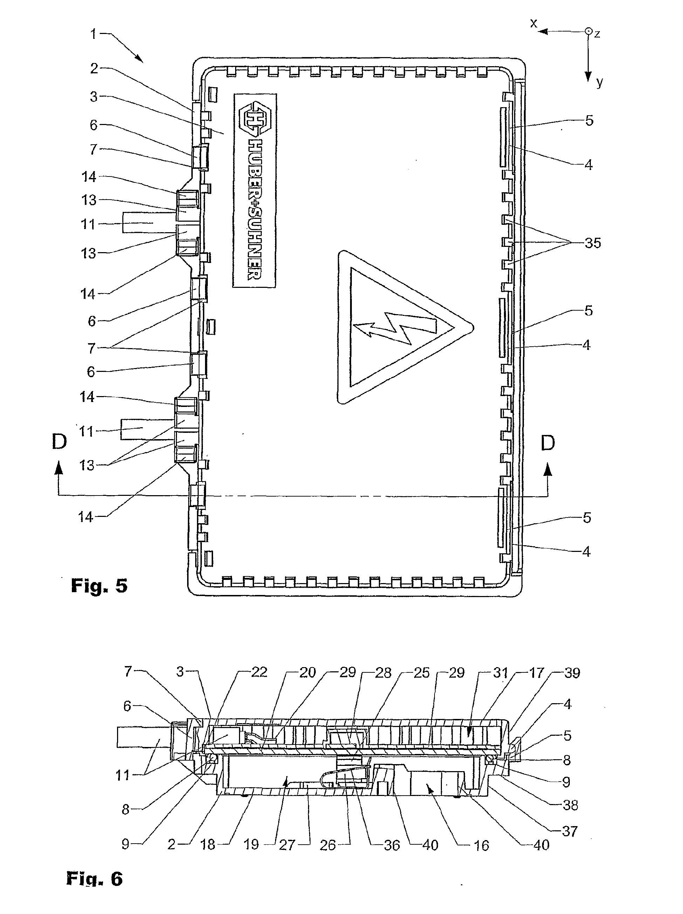

**Figur 1** zeigt eine Anschlussdose 1 in einer perspektivischen Darstellung von schräg vorne und oben. **Figur 2** zeigt die Anschlussdose 1 gemäss Figur 1 in einer perspektivischen Darstellung von schräg vorne und unten. **Figur 3** zeigt dieselbe Anschlussdose von schräg oben und hinten und **Figur 4** zeigt schräg unten und hinten. **Figur 5** zeigt die Anschlussdose 1 in einer Draufsicht und **Figur 6** zeigt einen Schnitt entlang der Linie DD aus Figur 5. Sich entsprechende Elemente/Bereiche sind in allen Figuren mit denselben Nummern versehen.

In den **Figuren 1** bis 6 ist ein Gehäuseunterteil 2 mit einem aufgesetzten Gehäuseoberteil 3 zu erkennen. Im hinteren Bereich weist das Gehäuseoberteil 3 Lagerzapfen 4 auf, die in entsprechende Lageröffnungen 5 des Gehäuseunterteils 2 eingreifen (vgl. unter anderem Figur 6). Im vorderen Bereich des Gehäuseunterteils 2 sind Schnapphacken 6 angebracht, die in entsprechende Schnapphackenöffnungen 7 des Gehäuseoberteils 3 eingreifen. Durch die Anzahl und Anordnung der Schnapphacken 6 wird erreicht, dass das Gehäuse der Anschlussdose nur durch ein speziell dafür ausgebildetes Werkzeug geöffnet werden kann. In der gezeigten Ausführungsform sind die Lagerzapfen 4 und die Lageröffnungen 5 so ausgestaltet, dass das Gehäuseoberteil 3 vom Gehäuseunterteil 2 abgenommen werden kann, sofern es im vorderen Bereich die Schnapphacken 6 gelöst werden und dieser vordere Bereich, gegenüber der Lagerzapfen 4, leicht angehoben wird. Alternativ oder in Ergänzung können am Gehäuseoberteil 3 Schnapphacken (nicht im Detail gezeigt) ausgebildet sein, die in entsprechende Gegenöffnungen im Bereich des Gehäuseunterteils passen. Eine Ausführungsform bei der die Schnapphacken am Gehäuseoberteil ausgebildet ist, bietet den Vorteil, dass beim Abbrechen eines Schnapphackens nicht das Gehäuseunterteil ersetzt werden muss. Je nach Ausführungsform und Anwendungsgebiet besteht z.B. die Möglichkeit das Gehäuseoberteil 3 nur mittels Schnappverbindungen und/oder Schraubverbindungen mit dem Gehäuseunterteil zu verbinden. Bei diesen Ausführungsformen kann unter Umständen auf Lagerzapfen und korrespondierenden Lageröffnungen verzichtet werden. Andere Verbindungsformen, z.B. in Form von Sicherungsstiften und Plomben sind möglich.

Das Gehäuseoberteil 3 der gezeigten Ausführungsform weist Kabelöffnungen 10 für eine externe Verkabelung 11 auf. Die Kabelöffnungen 10 sind als Klemmen 12 ausgebildet die zwei Klemmbacken 13 aufweisen, die beim Schliessen des Gehäuseoberteils 3 in entsprechende, am Gehäuseunterteil 2 ausgebildete, Klemmgegenbacken 14 eingreifen und durch diese gegen einen äusseren Mantel 15 der externen Verkabelung 11 gepresst werden.

Das Gehäuseunterteil 2 als auch das Gehäuseoberteil 3 der gezeigten Ausführungsform sind im Wesentlichen konkav ausgestaltet. Das Gehäuseunterteil 2 weist hier einen Boden 18, einen umlaufenden Rand 37 (Seitenwand) mit einem nach aussen stehenden Flansch 38 auf. Das Gehäuseunterteil 2 als Ganzes oder ein Teil davon, z.B. ein Teilbereich des Bodens 18, kann als Sockel für den nicht elektrischen Anschluss oder die Befestigung einer Solarzelle ausgelegt sein und entsprechende Verbindungs- und Anschlusselemente aufweisen. Das Gehäuseunterteil 2 ist auf der dem Boden 18 gegenüberliegenden Seite offen und umschliesst einen ersten Innenraumbereich 19. Das Gehäuseoberteil 2 weist einen Deckel 17 und einen umlaufenden Rand 39 (Seitenwand) auf. Das Gehäuseoberteil 3 ist auf der dem Boden 18 gegenüberliegenden Seite offen und umschliesst einen zweiten Innenraumbereich 31. Der erste und zweite Innenraumbereich 19, 31 bilden den Innenraum (Hohlraum) der Anschlussdose. Zwischen dem ersten und zweiten Innenraumbereich 19, 31 wird in Schliessstellung unter anderem eine Platine 20 eingebettet, die sich in der gezeigten Ausführungsform über den gesamten Innenraum erstreckt und als Aussenwand des zweiten innenraumbereichs 31 des Gehäuseoberteils 3 dient. Dadurch werden die im Innenraumbericht 31 angeordneten elektronischen oder elektrischen Bauteile 28 geschützt.

Wie in den Figuren 2, 4 und 6 ersichtlich ist, weist das Gehäuseunterteil 2 eine Anschlussöffnung 16 mit einem umlaufenden Rand 40, durch welche elektrische Anschlüsse 35 von Solarzellen in den Innenraum der Anschlussdose geführt werden. Im Innenraum der Anschlussdose sind der Anschlussöffnung 16 hier mehreren, seitlich nebeneinander angeordnete elektrische Anschlüsse (Klemmkontakte) 36 zugeordnet. Ein Boden 18 des Gehäuseunterteils 2 ist hier als Montagesockel ausgestaltet, indem er sich zur Befestigung der Anschlussdose 1 mittels eines geeigneten Klebstoffes auf einer ebenen Fläche, z.B. der Oberfläche (Rückseite) einer Solarzelle eignet. Der Boden 18 ist hierfür relativ grossflächig und eben gestaltet und weist eine umlaufende Rippe auf, so dass ein Klebstoff 34, z.B. Silikondichtmasse, um die Anschlussöffnung 16 herum bis maximal zur Rippe verteilt werden kann. Anschliessend wird die Anschlussdose 1 auf eine Oberfläche z.B. über dem Anschlussbereich einer Solarzelle, aufgesetzt und, falls erforderlich, bis zur Aushärtung des Klebers fixiert. Der Klebstoff kann gleichzeitig als Dichtmasse oder Füllerelement dienen und die Anschlussöffnung 16 bis zur Höhe des umlaufenden Randes 40 ausgegossen werden, sofern weder die Kühlungseigenschaften noch die Schliesseigenschaften der Anschlussdose beeinträchtigt werden. Die Anschlussdose 1 kann bei Bedarf auch auf andere Art und Weise befestigt werden, sofern die Funktion nicht beeinträchtigt wird.

In der gezeigten Ausführungsform ist zwischen dem Gehäuseunterteil 2 und der Platine 20 eine Dichtung 8 in einer umlaufenden Nut 9 des Gehäuseunterteils 2 angeordnet. Wie am besten aus Figur 6 hervorgeht, wird die Dichtung 8 bei geschlossenem Gehäuseoberteil 3 zwischen der Rückseite der Platine 20 und dem Gehäuseunterteil 2 so eingeklemmt, dass der/die erste Öffnung/Hohlraum 19 im Innern abgedichtet wird. Dadurch werden allfällig im ersten Hohlraum 19 angeordnete Kontakte und elektrische/elektronische Bauelemente gegen äussere Einflüsse geschützt. In der gezeigten Ausführungsform ist die Dichtung 8 in die Nut 9 eingelegt. Bei Bedarf besteht alternativ oder in Ergänzung die Möglichkeit Dichtungselemente (nicht näher dargestellt) im Gehäuseunter- und/oder am Gehäuseoberteil 3 anzuspritzen.

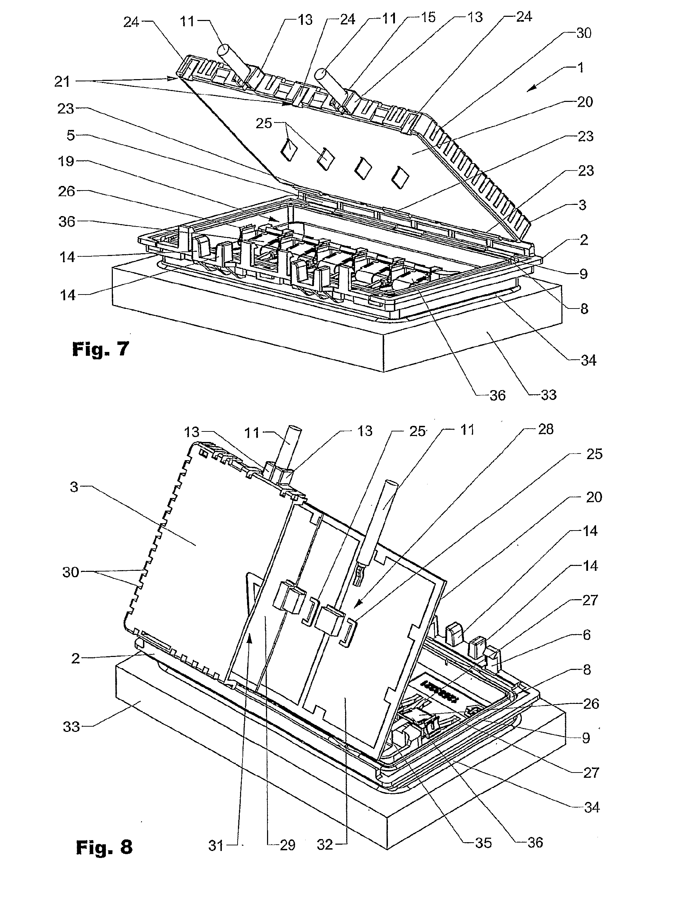

Wie am besten in den Figuren 7 und 8 ersichtlich, ist das Gehäuseoberteil 3 so ausgestaltet, dass es zur Aufnahme einer Platine 20 geeignet ist. Zu diesem Zweck weist das Gehäuseoberteil 3 Haltemittel 21 zur Aufnahme auf. In der gezeigten Ausführungsform handelt es sich dabei um eine Auflage 22, sowie zur Auflage 22 beabstandet angeordnete Hinterschnitte 23 und Schnappelemente 24, die so angeordnet sind, dass die Platine 20 in sie lösbar oder unlösbar eingeschnappt werden kann. Nach dem Einschnappen bildet die Platine 20 mit dem Gehäuseoberteil 3 eine Einheit, die vorkonfektioniert in das Gehäuseunterteil 2 eingesetzt und aus diesem wieder entnommen werden kann. Die externe Verkabelung 11 verläuft durch die Kabelöffnungen 10 und die Klemmbacken 13, die in dieser geöffneten Position noch keinen Druck auf den äusseren Mantel 15 der Verkabelung 11 ausüben. Erst wenn der Gehäuseoberteil 3 geschlossen wird, und die Klemmbacken 13 zwischen die Klemmgegenbacken 14 zu liegen kommen, wird das Kabel sicher festgehalten, so dass die Gefahr eines ungewollten Herausziehens gemindert wird.

Die Platine 20 weist auf ihrer nach aussen gerichteten Unterseite stiftförmige erste elektrische Kontakte 25 auf, die beim Schliessen des Gehäuseoberteils 3 der Anschlussdose 1 mit zweiten elektrischen Kontakten 26, die im Gehäuseunterteil 2 angeordnet sind, elektrisch leitend zusammenwirken. Wie zu erkennen ist sind die ersten elektrischen Kontakte 25 hier stiftförmig und über die Unterseite der Platine 20 überstehend ausgebildet. Die zweiten elektrischen Kontakte 26, die sich im Innern des Gehäuseunterteils 2 befinden, sind klemmförmig ausgestaltet und so angeordnet, dass die ersten elektrischen Kontakte 25 beim Schliessen in sie eingreifen. Sowohl die ersten und die zweiten elektrischen Kontakte sind aus Metallblech geformt. Während die ersten elektrischen Kontakte an der Platine 20 befestigt sind, sind die zweiten elektrischen Kontakte in entsprechende am Boden des Gehäuseunterteils 2 ausgestaltete Halterungen 27 eingeschnappt. Den zweiten elektrischen Kontakten 26 sind wirkverbunden Klemmekontakte 36 zugeordnet: In der gezeigten Ausführungsform sind die zweiten elektrischen Kontakte 26 und die Klemmekontakte 36 einteilig aus Metallblech geformt.

In **Figur 8** ist ein Teil des Gehäuseoberteils 3 weg geschnitten, so dass ein Blick auf die Platine 20 und darauf angeordnete elektrische und/oder elektronische Bauelemente 28 möglich ist. Die elektronischen Bauelemente 28 sind mit den hier durch die Platine 20 verlaufenden ersten elektrischen Kontakten 25 und/oder mit der externen Verkabelung 11 wirkverbunden. Das Gehäuseoberteil 3 weist Kühlöffnungen (Kühlschlitze) 30 auf, durch welche ein Kühlmedium, z.B. Luft, in einen zweiten Hohlraum 31 zwischen der Platine 20 und dem Gehäuseoberteil 3 strömen kann um die Bauelemente 28, sowie die Platine 20 zu kühlen. Um eine bessere Kühlung zu erzielen kann die Platine 20 und/oder eines der Gehäuseteile 2, 3 zumindest bereichsweise als Kühlelement 32 ausgestaltet sein. Zumindest Bereiche der Platine 20 und/oder der Bauelemente 28 und/oder der externen Verkabelung 11 können bei Bedarf mit einer Schutzschicht 29, zum Beispiel in Form eines Isolierlackes versehen sein, die elektrisch isolierend wirkt und/oder gegen äussere Einflüsse schützt.

Die Anschlussdose 1 ist in den **Figuren 7** und 8 auf einer Solarzelle 33 angeordnet gezeigt. Das Gehäuseunterteil 2 ist mittels eines Klebers 34 auf einer Oberfläche der Solarzelle 33 befestigt und mit elektrischen Anschlüssen 35 der Solarzelle 33 wirkverbunden. Dazu sind die elektrischen Anschlüsse 35 der Solarzelle 33 in Klemmekontakte 36 der zweiten elektrischen Kontakte 26 eingeklemmt. Die Klemmkontakte 36 sind hier so geformt und angeordnet, dass beim Schliessen bzw. im geschlossenen Zustand der Anschlussdose eine bestmögliche Klemmwirkung vorliegt und dadurch die elektrischen Anschlüsse 35 der Solarzelle 33 mechanisch gegen Lösen gesichert werden, so dass sich ein Ausgiessen des Anschlussöffnung 16 zur Fixierung der elektrischen Anschlüsse 35 erübrigt.

## Patentansprüche

1. Anschlussdose (1) zum Anschliessen einer Verkabelung (11) an eine Solarzelle (33) mit
(a) einem Gehäuseunterteil (2) und
(b) einem damit wirkverbindbaren Gehäuseoberteil (3),
**dadurch gekennzeichnet, dass**
(c) das Gehäuseoberteil (3) Haltemittel (21) zur Aufnahme einer Platine (20) aufweist,
(d) wobei der Gehäuseunterteil Wirkverbindungsmittel zum Wirkverbinden mit einer Basisplatte aufweist.

2. Anschlussdose (1) gemäss Patentanspruch 1, **dadurch gekennzeichnet, dass** die Wirkverbindungsmittel Schnapp- und/oder Schwalbenschwanzverbindungen sind.

3. Anschlussdose (1) gemäss einem der vorangehenden Patentansprüche, **dadurch gekennzeichnet, dass** die Platine zwischen dem Gehäuseunterteil und dem Gehäuseoberteil angeordnet ist.

4. Anschlussdose (1) gemäss einem der vorangehenden Patentansprüche, **dadurch gekennzeichnet, dass** das Gehäuseunterteil (2) eine Öffnung (16) zur Aufnahme von elektrischen Anschlüssen (35) einer Solarzelle (33) aufweist.

5. Anschlussdose (1) gemäss Patentanspruch 12, **dadurch gekennzeichnet, dass** die Öffnung (16) im Gehäuseboden (18) angebracht ist.

6. Anschlussdose (1) gemäss einem der vorangehenden Patentansprüche, **dadurch gekennzeichnet, dass** das Gehäuseoberteil (3) und die Platine (20) eine modulare Einheit bilden.

7. Anschlussdose (1) gemäss einem der vorangehenden Patentansprüche, **dadurch gekennzeichnet, dass** das Gehäuseoberteil (3) Mittel zum Anschliessen einer externen Verkabelung (11) aufweist.

8. Anschlussdose (1) gemäss einem der vorangehenden Patentansprüche, **dadurch gekennzeichnet, dass** die Haltemittel (21) des Gehäuseoberteils (3) zur Aufnahme der Platine (20) aus einer Auflage (22), einem Hinterschnitt (23) und/oder Schnappelementen (24) bestehen.

9. Anschlussdose (1) gemäss einem der vorangehenden Patentansprüche, **dadurch gekennzeichnet, dass** sich die Platine (20) im Wesentlichen über die gesamte Öffnung des Gehäuseoberteils (3) erstreckt.

10. Anschlussdose (1) gemäss einem der vorangehenden Patentansprüche, **dadurch gekennzeichnet, dass** die Platine (20) elektrische/elektronische Bauelemente (28) aufweist.

11. Anschlussdose (1) gemäss einem der vorangehenden Patentansprüche, **dadurch gekennzeichnet, dass** die elektrischen/elektronischen Bauelemente (28) auf der der Solarzelle (33) abgewandten Seite der Platine (20) montiert sind.

12. Anschlussdose (1) gemäss einem der vorangehenden Patentansprüche, **dadurch gekennzeichnet, dass** die Platine (20) mit dem Gehäuseunterteil (2) über erste und zweite elektrische Kontakte (25, 26) zusammenwirkt, die beim Schliessen des Gehäuseoberteils (3) mit dem Gehäuseunterteil (2) in Wirkverbindung treten.

13. Anschlussdose (1) gemäss einem der vorangehenden Patentansprüche, **dadurch gekennzeichnet, dass** das Gehäuseoberteil (3) Kühlöffnungen (30) aufweist.
